# EUROPÄISCHE PATENTSCHRIFT

(11) **EP 4 009 161 B1**
(45) Veröffentlichungstag und Bekanntmachung des Hinweises auf die Patenterteilung: **12.02.2025**
(21) Anmeldenummer: 20212077.0
(22) Anmeldetag: 07.12.2020
(51) Int. Cl.: G06F 8/65

(54) **VERFAHREN ZUM AKTUALISIEREN EINER SOFTWARE ODER EINER KONFIGURATION EINER KOMPONENTE EINES WINDPARKS SOWIE WINDPARK UND SYSTEM**
METHOD FOR UPDATING SOFTWARE OR CONFIGURATION OF A COMPONENT OF A WIND FARM AND WIND FARM AND SYSTEM
PROCÉDÉ DE MISE À JOUR D'UN LOGICIEL OU D'UNE CONFIGURATION D'UN COMPOSANT D'UN PARC ÉOLIEN, AINSI QUE PARC ÉOLIEN ET SYSTÈME

(43) Veröffentlichungstag der Anmeldung: 08.06.2022
(73) Patentinhaber: Wobben Properties GmbH, 26607 Aurich (DE)
(72) Erfinder: Jakobs, Thorsten, 26532 Grossheide (DE); Poolmann, Alexander, 26632 Ihlow (DE); Betten, Sascha, 26624 Südbrookmerland (DE); Houtrouw, Jan Heiko, 26605 Aurich (DE)
(74) Vertreter: Eisenführ Speiser

(56) Entgegenhaltungen:
- EP-A2- 1 788 478
- CN-A- 109 683 933
- SVENSSON AND P KARLSSON J: "Wind Farm Control Software Structure", INTERNATIONAL WORKSHOP ON TRANSMISSION NETWORKS FOR OFFSHORE WIND FARMS, XX, XX, 1 April 2002 (2002-04-01), pages 1 - 15, XP002254250

## Beschreibung

Die Erfindung betrifft ein Verfahren zum Aktualisieren einer Software oder einer Konfiguration einer Komponente eines Windparks sowie einen Windpark und ein System zum Ausführen dieses Verfahrens.

Bei Windenergieanlagen ist es nötig über die gesamte Lebenszeit oder Betriebszeit, deren Software oder Konfiguration häufiger oder regelmäßig zu aktualisieren. Beispielsweise werden Windenergieanlagen für eine lange Lebenszeit von 30 Jahren entwickelt und eine Vielzahl unterschiedlicher Komponenten in einem Windpark, in dem mehrere Windenergieanlagen angeordnet sind, verbaut. Diese Komponenten müssen aufgrund der langen Lebenszeit und einer sich innerhalb dieser Zeit verändernden Infrastruktur, beispielsweise zur Erfüllung der Anforderungen an eine IT-Sicherheit, auf den neusten Stand gebracht werden. Weiter müssen durch sich ändernde Normen, nach Aufstellung erzeugte Gutachten oder aus diversen anderen Gründen Betriebsführungsaufgaben, wie zum Beispiel ein Fledermausschutz oder eine Abschaltung zur Vermeidung von Radarreflexionen, an sich ändernde Anforderungen angepasst werden.

Bislang werden derartige Aktualisierungen manuell vor Ort auf die Windenergieanlage oder einzelne Komponenten der Windenergieanlage aufgespielt. Ein einheitlicher, beispielsweise zeitlich abgestimmter, Prozess ist in der Regel nicht möglich, da die Vielzahl der Komponenten, die einer Aktualisierung bedürfen, von vielen unterschiedlichen Herstellern stammen. Demnach ist ein häufiges Aufsuchen jeder einzelnen Windenergieanlage nötig, um diese stets auf dem aktuellen Stand zu halten und somit alle Anforderungen an das Gesamtsystem zu erfüllen. Eine Aktualisierung vor Ort ist daher sehr unwirtschaftlich.

Es wurden daher Anstrengungen unternommen, um die Aktualisierung aus der Ferne durchzuführen. Hierbei treten jedoch weitere Schwierigkeiten auf. Beispielsweise kann nicht jedem Hersteller einer Komponente ein Fernzugriff auf einen Windpark gewährt werden, um die von ihm gelieferte Komponente zu aktualisieren. Hierdurch hätte ein nahezu unkontrollierbarer Personenkreis Zugang zu einzelnen Anlagen oder einem Windpark, wodurch Gefahren eines Angriffs zunehmen. Wird von einer zentralen Stelle eine manuelle Aktualisierung der Komponenten durchgeführt, um den Kreis der möglichen Personen, die Zugriff auf den Windpark haben, zu beschränken, wird aufgrund der Vielzahl der nötigen Aktualisierungen dieser Vorgang fehleranfällig und sehr arbeits- sowie zeitintensiv.

Dokument EP 1 788 478 A2 offenbart ein Verfahren zum Aktualisieren von Software in einem Windpark, wobei eine Netzwerkverbindung zwischen dem Windpark und einem entfernten Kontrollzentrum hergestellt wird. Ein Softwareupdate wird dann von dem entfernten Kontrollzentrum an die Windenergieanlage übertragen. Auch das Dokument CN 109 683 933 A beschreibt ein Softwareupdate für eine Windenergieanlage. Ferner offenbart das Dokument SVENSSON AND P KARLSSON J: "Wind Farm Control Software Structure", INTERNATIONAL WORKSHOP ON TRANSMISSION NETWORKS FOR OFFSHORE WIND FARMS eine Softwarestruktur für Windparks.

Aufgabe der vorliegenden Erfindung ist es daher, den Problemen des Standes der Technik zu begegnen. Insbesondere soll eine Aktualisierung einer Software oder einer Konfiguration einer Windenergieanlage oder eines Windparks mit wirtschaftlich vertretbarem Aufwand ermöglicht werden, ohne die IT-Sicherheit zu gefährden. Jedenfalls soll eine Alternative zu den aus dem Stand der Technik bekannten Lösungen gefunden werden.

Hierzu wird ein Verfahren nach Anspruch 1 vorgeschlagen.

Die Erfindung umfasst ein Verfahren zum Aktualisieren einer Software oder einer Konfiguration mindestens einer Komponente eines Windparks. Die Komponente ist bevorzugt eine Komponente mindestens einer Windenergieanlage, die im Windpark angeordnet ist, oder eine Komponente einer weiteren Einheit des Windparks, wie beispielsweise eines Windmessmastes, eines Energiespeichers, eines Windparkreglers oder einer Windparksteuerung. Eine Komponente ist demnach beispielsweise eine Steuerung für einen Pitchantrieb, eine Windenergieanlagensteuerung, eine Leistungsregelung oder dergleichen. Software umfasst beispielsweise eine Betriebssoftware der Komponente oder ein Programm, das von einer Betriebssoftware einer Komponente aufgerufen wird. Eine Konfiguration umfasst beispielsweise Konfigurationsdaten, mit denen ein Betrieb der Komponente an individuelle Gegebenheiten der Komponente angepasst werden kann. Konfigurationsdaten umfassen beispielsweise Parameterdaten, die auf den Standort der Windenergieanlage bezogen sind und individuell für einen Windpark oder eine Windenergieanlage festgelegt werden. Ein Beispiel für derartige Konfigurationsdaten können beispielsweise Zeiten sein, die bestimmte Betriebsarten vorgeben. Dies wird beispielsweise benötigt, wenn eine Windenergieanlage oder alle Windenergieanlagen eines Windparks aufgrund ihres Standorts oder ihrer Standortnähe zu Wohngebieten zu bestimmten Zeiten zur Wahrung eines Schallschutzes abgeschaltet werden sollen.

Gemäß dem Verfahren werden zunächst Aktualisierungsdateien für mehrere unterschiedliche Komponenten von mehreren Windparks und eine Liste mit mehreren Einträgen bereitgestellt. Jede Aktualisierungsdatei ist genau einem Komponententyp zugeordnet. Mehrere Komponenten, also Komponenten des gleichen Typs, die beispielsweise in einem Windpark verteilt mehrfach angeordnet oder in mehreren Windparks angeordnet sind, können durch die Aktualisierungsdatei, die dem Komponententyp zugeordnet ist, aktualisiert werden. Jeder Eintrag in der Liste umfasst eine Zuordnung einer bereitgestellten Aktualisierungsdatei für einen Komponententyp. Im nächsten Schritt wird durch einen Aktualisierungsverteiler geprüft, ob in der Liste ein Eintrag für einen Komponententyp einer Komponente enthalten ist, die in dem Windpark angeordnet ist, in dem auch der Aktualisierungsverteiler angeordnet ist.

Ist ein Eintrag vorhanden, so wird die Aktualisierungsdatei für die Komponente in den Aktualisierungsverteiler geladen und die Aktualisierungsdatei für die Komponente bereitgestellt. Im Falle, dass kein Eintrag vorhanden ist, wird nach Ablauf einer Dauer erneut geprüft, ob in der Liste ein Eintrag für die Komponente enthalten ist. Eine Aktualisierungsdatei umfasst eine Software oder eine Softwareaktualisierungsdatei, die auch Softwareupdate genannt werden kann. Alternativ umfasst eine Aktualisierungsdatei eine Konfiguration oder Konfigurationsdaten, zum Beispiel Parameter.

Es wird somit vorteilhafterweise eine zentrale Stelle zum Bereitstellen von Aktualisierungsdateien für eine Vielzahl von unterschiedlichen Komponenten desselben Typs, in der die Aktualisierungsdateien für die Komponenten hinterlegt sind, geschaffen. Die Aufgabe des Abrufens der Aktualisierungsdatei für eine Komponente wird jedoch an einen Aktualisierungsverteiler übergeben, der im Windpark enthalten ist und Kenntnis hat, für welche Komponenten bereitgestellte Aktualisierungsdateien benötigt werden. Der Aktualisierungsverteiler ruft dann von sich aus, ohne manuellen Eingriff von außen, bereitgestellte und für die Komponenten des Windparks verfügbare Aktualisierungsdateien ab. Neue Aktualisierungsdateien müssen demnach nur einmal zentral bereitgestellt werden und dank des Aktualisierungsverteilers wird dafür Sorge getragen, dass die bereitgestellten Aktualisierungsdateien zur Aktualisierung der Komponente geladen und verwendet werden.

Ein Zugriff auf einen Windpark von einer Vielzahl von Herstellern der unterschiedlichen Komponenten ist somit nicht mehr nötig, so dass die Gefahr eines Angriffs auf den Windpark über eine Datenverbindung minimiert wird. Ferner wird die Fehleranfälligkeit bei der Aktualisierung durch den automatisierten Ablauf der Aktualisierung reduziert.

Gemäß einer ersten Ausführungsform wird die bereitgestellte Liste regelmäßig, also periodisch oder wenn diese einen neuen Eintrag erhält, vom Aktualisierungsvertreter geladen. Der Aktualisierungsverteiler kennt alle Komponenten des Windparks, in dem er angeordnet ist. Die Komponenten, die im Windpark angeordnet sind, sind nämlich im Aktualisierungsverteiler hinterlegt. Sind Komponenten noch nicht hinterlegt, so ist der Aktualisierungsverteiler vorzugsweise eingerichtet, zu prüfen, ob ein Eintrag für die noch nicht hinterlegte Komponente vorhanden ist, wenn die Komponente beim Aktualisierungsverteiler ein Update anfragt. Der Aktualisierungsverteiler hat erfindungsgemäß eine Liste mit Typen von Komponenten, die in einem Windpark verbaut werden können. Bei der Anfrage der Komponente teilt diese dem Aktualisierungsverteiler dann ihren Typ mit, so dass die Prüfung möglich ist. So kann der Aktualisierungsverteiler prüfen, ob in der Liste ein Eintrag für eine Komponente enthalten ist, die im Windpark angeordnet ist.

Dank des regelmäßigen Herunterladens der Liste muss nur eine geringe Datenmenge vom Aktualisierungsverteiler im Vergleich zu einer allen bereitgestellten Aktualisierungsdaten entsprechenden Datenmenge geladen werden. Der Aktualisierungsverteiler kann anhand der Liste dann entscheiden, ob ein Abruf einer größeren Datenmenge nötig ist.

Gemäß einer weiteren Ausführungsform fragt mindestens eine der Komponenten des Windparks beim Aktualisierungsverteiler des Windparks periodisch ab, ob eine Aktualisierungsdatei für die jeweilige Komponente im Aktualisierungsverteiler vorliegt. Eine periodische Abfrage umfasst hier beispielsweise eine Abfrage mit einer festen Frequenz, beispielsweise täglich zu einer bestimmten Uhrzeit, oder wöchentlich zu einer bestimmten Uhrzeit oder mit einer variablen Frequenz, die abhängig von weiteren Vorgaben sein kann. Liegt eine Aktualisierungsdatei im Aktualisierungsverteiler vor, so wird diese durch die Komponente vom Aktualisierungsverteiler geladen.

Die Komponenten fragen also beim Aktualisierungsverteiler selbstständig, vorzugsweise automatisch ab, ob eine Aktualisierungsdatei bereits vorliegt. Hierdurch ist gewährleistet, dass jede Komponente im Wesentlichen mit einer in der Komponente ohnehin bereitgestellten automatischen Aktualisierungsüberprüfung ohne Anpassung der Komponente aktualisiert werden kann. Hierfür ist außerdem eine Datenverbindung mit einem zum Windpark externen Teilnehmer nicht mehr nötig.

Gemäß einer weiteren Ausführungsform umfasst der Windpark einen Aktualisierungsvermittler. Der Aktualisierungsvermittler umfasst eine Komponentenliste und fragt periodisch beim Aktualisierungsverteiler ab, ob Aktualisierungsdateien für die in der Komponentenliste enthaltenen Komponenten im Aktualisierungsverteiler vorliegen. Im Fall, dass mindestens eine Aktualisierungsdatei vorliegt, wird die Aktualisierungsdatei durch den Aktualisierungsvermittler geladen. Der Aktualisierungsvermittler aktualisiert dann die entsprechende Komponente mit der Aktualisierungsdatei.

Gemäß dieser Ausführungsform können somit auch Komponenten im Windpark, die selbst nicht eingerichtet sind, periodisch Aktualisierungsdateien beim Aktualisierungsverteiler anfragen, da diese beispielsweise nicht für einen automatischen Updateprozess eingerichtet sind oder die nicht mit dem Aktualisierungsverteiler direkt kommunizieren können, dennoch stets auf einem aktuellen Stand gehalten werden. Dies ermöglicht der Aktualisierungsvermittler. Der Aktualisierungsvermittler handelt hier stellvertretend für alle Komponenten, die in einer Komponentenliste des Aktualisierungsvermittlers eingetragen sind, und fragt für diese Komponenten stellvertretend beim Aktualisierungsverteiler ab, ob eine Aktualisierungsdatei für die in der Komponentenliste enthaltenen Komponenten bereitsteht. Ist dies der Fall, übernimmt der Aktualisierungsvermittler das Laden der Aktualisierungsdatei vom Aktualisierungsverteiler und das Installieren oder Aktualisieren der entsprechenden Komponente. Ein automatischer Aktualisierungsprozess muss somit nicht in der Komponente selbst realisiert sein, so dass auch Komponenten ohne einen derartigen Aktualisierungsprozess im Windpark eingesetzt werden können.

Gemäß einer weiteren Ausführungsform umfassen die Aktualisierungsdateien Metadaten. Der Aktualisierungsvermittler extrahiert aus den Metadaten einer einer Komponente zugeordneten Aktualisierungsdatei Installationsanweisungen und verwendet diese Installationsanweisungen bei der Aktualisierung der Komponente mit der zugeordneten Aktualisierungsdatei. Jede Aktualisierungsdatei selbst enthält daher neben einem Softwareupdate oder einem Konfigurationsupdate Metadaten, die dem Aktualisierungsvermittler automatisch beim Laden der Aktualisierungsdatei übermittelt werden. Dieser kann daraufhin die Installationsanweisungen extrahieren und erhält somit genaue Informationen darüber, wie die Komponente genau zu aktualisieren ist.

Ein Aktualisierungsvermittler muss daher lediglich einen Eintrag für eine Komponente in der Komponentenliste erhalten, für die der Aktualisierungsvermittler das Herunterladen und Aktualisieren übernehmen soll. Der Aktualisierungsvermittler muss darüber hinaus nicht jedes Mal, wenn eine neue Komponente über ihn neu verwaltet werden soll, mit weiteren Informationen versorgt werden, wie genau diese Komponente zu aktualisieren ist. Diese Informationen, nämlich die Installationsanweisungen erhält der Aktualisierungsvermittler automatisch mit den Aktualisierungsdateien einer Komponente. Ein Hinzufügen von beliebigen Komponenten im Windpark, die regelmäßig aktualisiert werden, ist somit mit nur geringem Aufwand möglich, insbesondere ohne einen Aktualisierungsvermittler aufwendig selbst zu aktualisieren.

Erfindungsgemäß werden die Aktualisierungsdaten und/oder die Liste mit mehreren Einträgen von einem Datenspeicher bereitgestellt. Der Datenspeicher ist außerhalb des Windparks angeordnet. Der Datenspeicher ist vorzugsweise Bestandteil eines Rechenzentrums. Das Bereitstellen von neuen Aktualisierungsdateien sowie das Aktualisieren der Liste ist somit ohne Zugriff auf die Windparks selbst möglich. Vorzugsweise kann eine Datenverbindung zwischen dem Datenspeicher und dem Aktualisierungsverteiler aufgebaut werden, die als externe Datenverbindung bezeichnet werden kann und beispielsweise einer Internetverbindung entspricht.

Gemäß einer weiteren Ausführungsform wird eine neue Softwareaktualisierung oder Konfigurationsdatei einer Komponente, die in Form einer Aktualisierungsdatei bislang noch nicht im Datenspeicher bereitgestellt ist, vor dem Bereitstellen um Metainformationen ergänzt und als Aktualisierungsdatei bereitgestellt. Alternativ oder zusätzlich wird die neue Softwareaktualisierung oder Konfigurationsdatei getestet und/oder verifiziert. Erst daraufhin wird die Konfigurationsdatei oder Softwareaktualisierung zusammen mit den Metadaten als neue Aktualisierungsdatei, vorzugsweise in den Datenspeicher geladen, oder bereitgestellt. Die Metadaten einer Aktualisierungsdatei umfassen insbesondere Informationen über die Komponente, für die die Aktualisierungsdatei vorgesehen ist. Weiter umfassen die Metadaten alternativ oder zusätzlich Installationsanweisungen für den Aktualisierungsvermittler, wobei die Installationsanweisungen umfassen, wie eine Aktualisierung der Komponente der die Aktualisierungsdatei zugeordnet ist, ausgeführt wird. Daraufhin wird die Liste im Datenspeicher basierend auf den Informationen der Metadaten aktualisiert.

Auf einfache Weise ist so eine neue Softwareaktualisierung, also ein Softwareupdate, oder eine neue Konfigurationsdatei, also ein Konfigurationsupdate, als neue Aktualisierungsdatei bereitstellbar, die von einer Vielzahl von Komponenten des gleichen Typs abrufbar sind.

Gleichzeitig wird durch Testen und/oder Verifizieren sichergestellt, dass die Verwendung der Aktualisierungsdatei nicht zu Fehlern oder Beschädigungen der Komponente oder der mit der Komponente verbundenen Infrastruktur führt. Weiter ist durch die Metainformationen auch in besonders einfacher Weise eine Installationsanweisung für den Aktualisierungsvermittler bereitstellbar.

Gemäß einer Ausführungsform wird die Liste durch einen Rechner, der auch Broker genannt werden kann, bereitgestellt, der vorzugsweise nicht dem Datenspeicher entspricht. Der Rechner ist außerhalb des Windparks bereitgestellt. Zwischen dem Rechner und dem Aktualisierungsverteiler besteht eine permanente oder eine periodisch hergestellte Datenverbindung. Die Datenverbindung zwischen dem Rechner und dem Aktualisierungsverteiler besteht permanent oder wird periodisch hergestellt.

Es besteht somit immer oder zumindest in regelmäßigen Abständen eine Verbindung zwischen zwei Teilnehmern eines Datennetzwerks, die sich gegenseitig eindeutig identifizieren können. Daher können besonders geeignete Maßnahmen getroffen werden, um diese Verbindung sehr sicher zu gestalten. Der Aktualisierungsverteiler baut vorzugsweise von sich aus die Datenverbindung mit dem Rechner auf, um die Liste vom Rechner abzurufen. Der Aktualisierungsverteiler ist vorzugsweise derart ausgestaltet, dass er nicht von außerhalb des Windparks erreichbar ist, sondern nur von sich aus eine zum Windpark externe Datenverbindung aufbauen kann. Durch eine permanente Verbindung mit dem Rechner ist es möglich dem Aktualisierungsverteiler aktualisierte Listen möglichst zeitnah mitzuteilen, wobei ein Sicherheitsrisiko gleichzeitig minimiert wird.

Gemäß einer weiteren Ausführungsform baut der Aktualisierungsverteiler eine weitere Datenverbindung zum Laden der Aktualisierungsdatei mit dem Datenspeicher auf. Diese weitere Datenverbindung ist unterschiedlich zu der Datenverbindung mit dem Datenspeicher. Nach dem Laden der Aktualisierungsdatei vom Datenspeicher wird die weitere Datenverbindung wieder unterbrochen. Insbesondere eine breitbandige Datenverbindung, die eingerichtet ist, große Datenmengen zur Aktualisierung zu laden, wird daher regelmäßig wieder unterbrochen, so dass diese nicht angreifbar ist oder unnötige Bandbreite belegt. Der Aktualisierungsverteiler selbst baut vorzugsweise die weitere Datenverbindung von sich aus auf und ist gesichert, dass von außerhalb des Windparks zum Aktualisierungsverteiler keine Datenverbindung aufgebaut werden kann. Der Aktualisierungsverteiler ist somit besonders gegen Angriffe auf den Windpark geschützt.

Gemäß einer weiteren Ausführungsform umfasst die Aktualisierungsdatei eine Softwareaktualisierung. Alternativ umfasst die Aktualisierungsdatei Konfigurationsdaten, die beispielsweise Parametereinstellungen umfassten. Insbesondere im Fall, dass die Aktualisierungsdatei Konfigurationsdaten umfasst, werden vorzugsweise im Windpark Maßnahmen getroffen, die ein Einspielen von Aktualisierungsdateien über eine Schnittstelle vor Ort innerhalb des Windparks verhindern.

Es kann sichergestellt werden, dass beispielsweise Konfigurationsdaten der Komponenten eines Windparks nur über den Datenspeicher in Form von Aktualisierungsdateien für eine Aktualisierung verwendet werden. Eine falsche Einstellung von Parametern durch beliebiges Verstellen von Parametern vor Ort wird somit ausgeschlossen. Außerdem ist, da zentral im Datenspeicher alle Konfigurationsdateien hinterlegt sind, zu jedem Zeitpunkt genau feststellbar, welche Konfigurationsdaten in welcher Komponente hinterlegt sind. Aufgrund des automatischen Abrufs aktueller oder neuer Konfigurationsdaten durch den Aktualisierungsverteiler und gegebenenfalls einen Aktualisierungsvermittler werden alle Komponenten automatisch immer mit der aktuellsten Konfiguration bereitgestellt. Daher ist ein Vergleich der Konfigurationsdaten, die tatsächlich zur Einstellung verwendet wurden, mit vertraglich geforderten Konfigurationsdaten jederzeit ausführbar und es ist zu jedem Zeitpunkt sicher feststellbar, ob den vertraglichen Verpflichtungen durch entsprechende Konfigurationen nachgekommen wurde.

Gemäß einer weiteren Ausführungsform umfasst mindestens ein Eintrag in der Liste zusätzlich eine Information über mindestens einen Windpark, für den die Aktualisierungsdatei abrufbar ist. Alternativ oder zusätzlich ist mindestens einem Eintrag ein Zähler zugeordnet, der nach einer Initialisierung mit einem vorgegebenen Wert bei jedem Abruf der Aktualisierungsdatei heruntergezählt und in der Liste mit seinem aktuellen Wert gespeichert wird. Ab einem Schwellenwert, zum Beispiel einem Wert von 0, sind die Aktualisierungsdaten nicht mehr abrufbar.

Somit kann gezielt eine Aktualisierungsdatei nur für bestimmte Komponenten einer vordefinierten Anzahl von Windparks bereitgestellt werden, um so die Funktion der Aktualisierungsdatei zunächst auf einer reduzierten Anzahl von Komponenten im Feld zu testen oder zu verifizieren. Erst nach einem Abschluss eines solchen Tests wird dann die Aktualisierungsdatei für alle Komponenten bereitgestellt. Eine verbesserte Verifikation neuer Aktualisierungsdateien, also beispielsweise von Softwareupdates oder Konfigurationsupdates ist somit möglich. Fehler, die von den Aktualisierungsdateien ausgehen wirken sich somit nicht auf alle Windparks gleichzeitig aus, sondern lediglich auf einen beschränkten Teil. Gemäß einer weiteren Ausführungsform meldet der Aktualisierungsverteiler einen Fehler beim Aktualisieren einer Komponente an die Datenbank und/oder den Rechner. Somit kann anhand der Daten in der Datenbank und/oder dem Rechner, die beispielsweise als Fehlerprotokoll gespeichert werden, immer davon ausgegangen werden, dass eine Komponente mit den aktuellsten Daten, beispielsweise den aktuellsten Softwareupdates oder den aktuellsten Konfigurationsdaten konfiguriert ist. Ist dies nicht der Fall, muss in der Datenbank und/oder dem Rechner ein Fehler vorliegen. Ein Abgleich vertraglich vorgeschriebener mit tatsächlich vorhandenen Konfigurationsdaten, beispielsweise Parametereinstellungen, ist somit sicher möglich.

Weiterhin umfasst die Erfindung einen Windpark, der eingerichtet ist, das Verfahren nach einem der vorhergehenden Ausführungsformen auszuführen. Der Windpark umfasst mehrere Windenergieanlagen und mehrere Komponenten mindestens eines Komponententyps. Der Windpark umfasst ferner einen Aktualisierungsverteiler, der eingerichtet ist, eine Liste von einem Datenspeicher abzurufen, die mehrere Einträge umfasst, wobei jeder Eintrag eine bereitgestellte Aktualisierungsdatei für einen vordefinierten Komponententyp umfasst. Weiter ist der Aktualisierungsverteiler eingerichtet zu prüfen, ob in der Liste ein Eintrag für einen Komponententyp einer Komponente enthalten ist, die im Windpark, in dem der Aktualisierungsverteiler angeordnet ist, angeordnet ist. Im Falle, dass ein solcher Eintrag vorhanden ist, ist der Aktualisierungsverteiler eingerichtet, eine Aktualisierungsdatei für die Komponente zu laden und für die Komponente bereitzustellen. Gemäß einer Ausführungsform umfasst der Windpark einen Aktualisierungsvermittler, der eine Komponentenliste umfasst. Der Aktualisierungsvermittler ist eingerichtet, vorzugsweise periodisch beim Aktualisierungsverteiler abzufragen, ob Aktualisierungsdaten für die in der Komponentenliste enthaltenen Komponenten im Aktualisierungsverteiler vorliegen. Im Falle, dass eine Aktualisierungsdatei vorliegt, ist der Aktualisierungsvermittler eingerichtet, die Aktualisierungsdatei vom Aktualisierungsverteiler zu laden und die Komponente, für die die Aktualisierungsdatei geladen wurde, zu aktualisieren.

Außerdem umfasst die Erfindung ein System für einen Windpark nach einer der vorgenannten Ausführungsformen. Das System umfasst ein Rechenzentrum, das eingerichtet ist, Aktualisierungsdateien für den Windpark sowie eine Liste bereitzustellen, wobei die Liste Einträge umfasst und jeder Eintrag in der Liste eine bereitgestellte Aktualisierungsdatei für einen vordefinierten Komponententyp umfasst.

Weitere Ausführungsformen ergeben sich anhand der in den Figuren näher erläuterten Ausführungsbeispiele. Hierbei zeigen:
- Figur 1: eine Windenergieanlage,
- Figur 2: einen Windpark,
- Figur 3: ein System mit einem Windpark gemäß einem Ausführungsbeispiel und
- Figur 4: die Schritte eines Ausführungsbeispiels des Verfahrens.

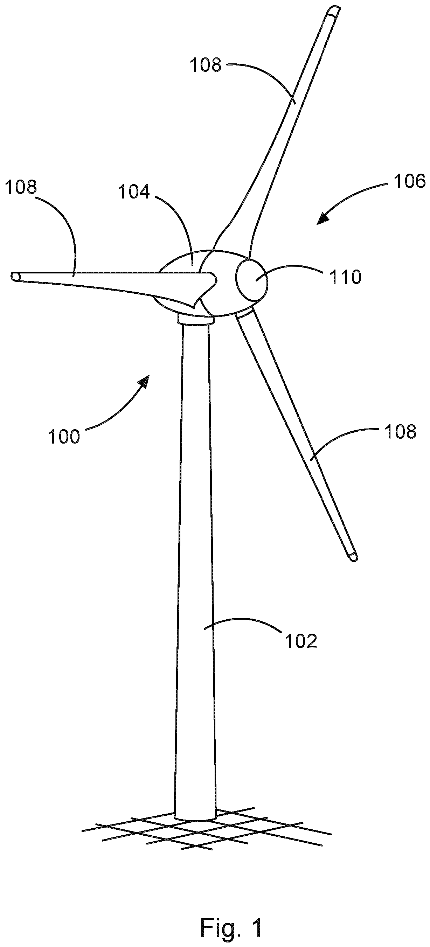

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

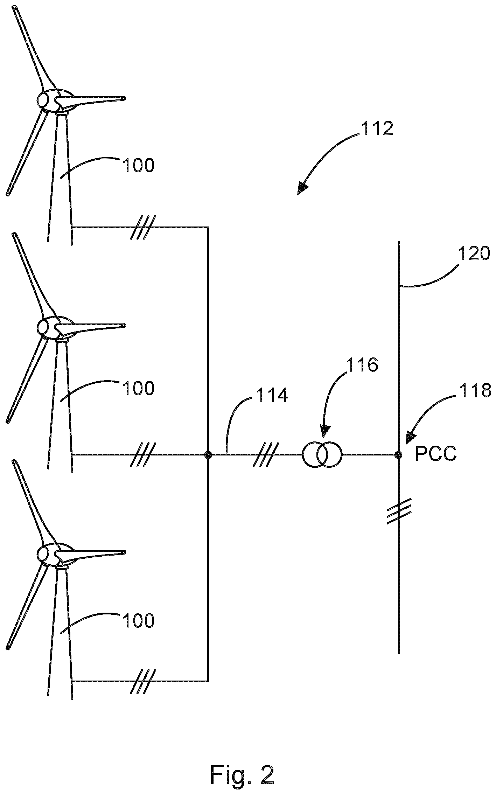

In Figur 2 ist ein Windpark 112 mit exemplarisch drei Windenergieanlagen 100 dargestellt. Die Windenergieanlagen 100 können gleich oder verschieden sein. Die Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Figur 2 ist nur eine vereinfachte Darstellung eines Windparks 112, die beispielsweise keine Leistungssteuerung zeigt, obwohl natürlich eine Leistungssteuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

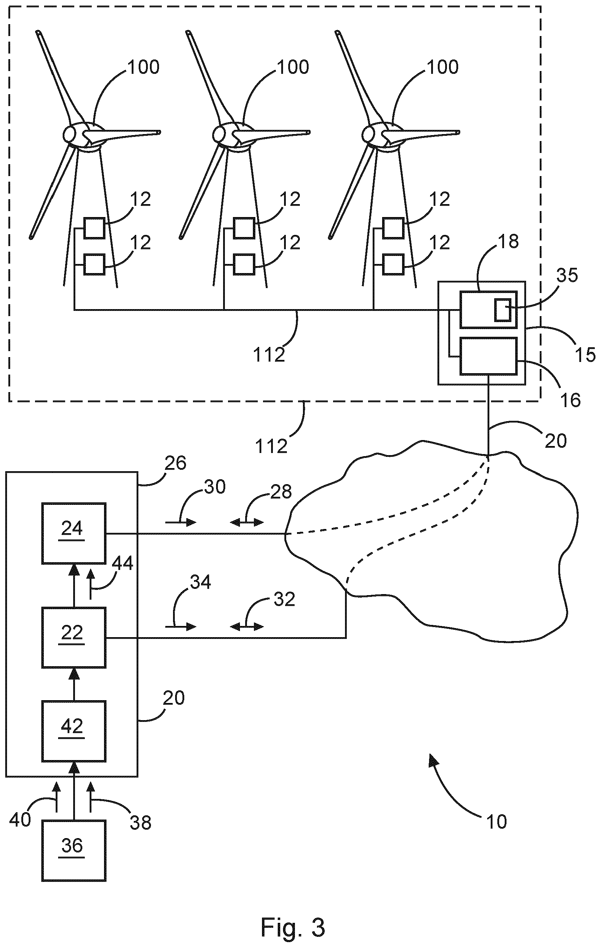

Figur 3 zeigt ein System 10 mit einem Windpark 112, der mehrere Windenergieanlagen 100 umfasst. Jede der Windenergieanlagen 100 weist jeweils mehrere Komponenten 12 auf. Die Komponenten 12 können zumindest teilweise vom gleichen Typ oder von unterschiedlichen Typen sein und sind über ein internes Datennetzwerk 14 mit einem Windparkrechner 15, der beispielsweise ein SCADA-System ist, verbunden. Im Windparkrechner 15 sind ein Aktualisierungsverteiler 16 und ein Aktualisierungsvermittler 18 angeordnet. Aktualisierungsverteiler 16 und Aktualisierungsvermittler 18 sind ebenfalls mit dem internen Datennetzwerk 14 verbunden, so dass diese Daten an die Komponenten 12 der Windenergieanlagen 100 senden können. Aktualisierungsverteiler 16 und Aktualisierungsvermittler 18 sind über das interne Datennetzwerk 14 auch miteinander verbunden und können so Daten austauschen.

Der Aktualisierungsverteiler 16 ist weiter durch ein externes Datennetzwerk 20 mit einem Datenspeicher 22 und einem weiteren Rechner 24, die Bestandteil eines Rechenzentrums 26 sind, über externe Datenverbindungen verbindbar. Das externe Datennetzwerk 20 weist beispielsweise eine permanente Datenverbindung 28 zwischen dem Rechner 24 und dem Aktualisierungsverteiler 16 auf. Diese permanente Datenverbindung 28 dient, um Listen 30 vom Rechner 24 an den Aktualisierungsverteiler 16 zu übertragen.

Im Aktualisierungsverteiler 16 wird anhand einer empfangenen Liste 30 geprüft, ob Aktualisierungsdateien für die Komponenten 12 des Windparks 112 bereitstehen. Stehen derartige Aktualisierungsdateien bereit, so baut der Aktualisierungsverteiler 16 eine weitere Datenverbindung 32 über das externe Datennetzwerk 20 mit dem Datenspeicher 22 auf und lädt die Aktualisierungsdateien 34, die zur Verfügung stehen, in einen Speicher des Aktualisierungsverteilers 16.

Die Aktualisierungsdateien 34 sowie die Liste 30 werden im Rechenzentrum 20 bereitgestellt, indem beispielsweise ein Hersteller einer Komponente oder ein Betreiber des Windparks über einen externen Rechner 36 eine Softwareaktualisierung 38 oder eine Konfigurationsdatei 40 zur Aktualisierung einer Konfiguration in einen Eingangsrechner 42 des Rechenzentrums 42 einspeist. Im Eingangsrechner 42 wird die Software 38 oder die Konfiguration 40 verifiziert, getestet oder zumindest um Metainformationen ergänzt und daraufhin im Datenspeicher 22 eine Aktualisierungsdatei, die die Softwareaktualisierung 38 und/oder die Konfigurationsdatei 40 enthält, bereitgestellt.

Weiter wird ein Eintrag 44 aus den Metadaten zur Aktualisierung der Liste 30 an den Rechner 24 übertragen. Der Rechner 24 aktualisiert einen bereits vorhandenen Eintrag in der Liste oder ergänzt die Liste um einen neuen Eintrag 44. Somit liegen im Aktualisierungsverteiler 16 Aktualisierungsdateien 34 für die Komponenten 12 vor, wenn diese im Datenspeicher 22 bereitgestellt sind.

Die Komponenten 12 fragen über das interne Datennetzwerk 14 beim Aktualisierungsverteiler 16 ab, ob eine Aktualisierungsdatei 34 für die jeweilige Komponente 12 bereitliegt und im Fall, dass diese bereitliegt, wird diese von der Komponente 12 heruntergeladen und in der Komponente 12 entweder die Software oder eine Konfiguration in Abhängigkeit der Aktualisierungsdateien aktualisiert.

Einige der Komponenten 12 sind nicht eingerichtet beim Aktualisierungsverteiler 16 abzufragen, ob eine neue Aktualisierungsdatei 34 vorliegt. Hierfür ist der Aktualisierungsvermittler 18 vorgesehen, der an Stelle der Komponente 12 beim Aktualisierungsverteiler 16 abfragt, ob Aktualisierungsdateien 34 für Komponenten 12 bereitstehen, die sich nicht automatisch aktualisieren können. Derartige Komponenten 12 sind im Aktualisierungsvermittler 18 in einer Komponentenliste 35 hinterlegt. Liegt eine Aktualisierungsdatei 34 bereit, wird diese vom Aktualisierungsvermittler 18 geladen. Der Aktualisierungsvermittler 18 extrahiert dann Installationsanweisungen aus den Metadaten der Aktualisierungsdatei 34 und aktualisiert die entsprechende Komponente 12.

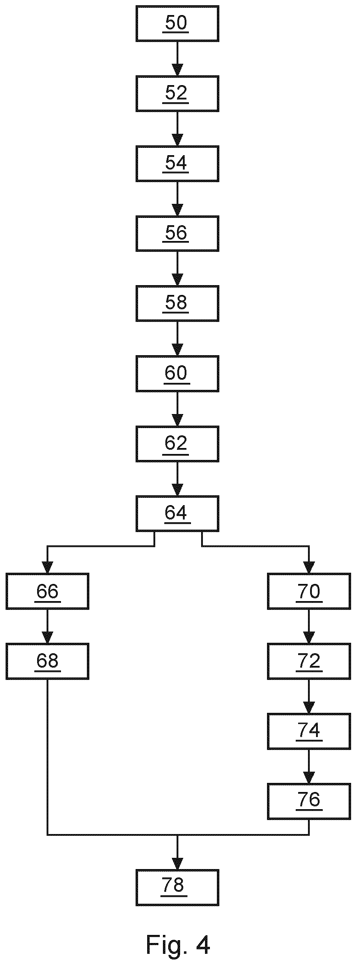

Das Verfahren zum Aktualisieren von Software oder einer Konfiguration ist zur besseren Übersicht in Figur 4 beschrieben. In einem Schritt 50 wird von einem externen Rechner 36 eine neue Softwareaktualisierung 38 oder Konfigurationsdatei 40 dem Rechenzentrum 20 vorgegeben. In einem Schritt 52 wird eine Softwareaktualisierung 38 oder eine Konfigurationsdatei 40 getestet oder verifiziert. Außerdem werden der Softwareaktualisierung 38 oder der Konfigurationsdatei 40 Metainformationen in Form von Metadaten hinzugefügt, um so eine Aktualisierungsdatei 34 zu erhalten. Diese wird in einem Schritt 54 in einer Datenbank 22 bereitgestellt. Anhand der Metainformationen ist erkennbar, für welchen Komponententyp die Aktualisierungsdatei geeignet ist und es wird im Schritt 56 in einem Rechner 24 ein Eintrag in einer Liste erstellt, der den Komponententyp benennt, für den die Aktualisierungsdatei 34 vorliegt. In einem Schritt 58 wird von einem Aktualisierungsverteiler 16 des Windparks 112 die Liste 30 mit mehreren Einträgen 44 heruntergeladen. In einem Schritt 60 wird geprüft, für welche der Komponenten 12, die im Windpark 112 enthalten sind, eine Aktualisierungsdatei 34 im Datenspeicher 22 bereitsteht. Daraufhin wird im Schritt 62 eine Datenverbindung 32 mit dem Datenspeicher 22 aufgebaut und alle Aktualisierungsdateien 34 heruntergeladen, die für die Komponenten 12 des Windparks 112 bereitgestellt sind. Die Aktualisierungsdateien 34 werden dann im Aktualisierungsverteiler 16 im Schritt 64 gespeichert.

Im Schritt 66 fragen nun derartige Komponenten 12, die eingerichtet sind sich selbst zu aktualisieren, beim Aktualisierungsverteiler 16 ab, ob eine Aktualisierungsdatei 34 für die Komponente 12 vorliegt. Liegt diese vor, so wird in einem Schritt 68 die Aktualisierungsdatei von der entsprechenden Komponente 12 geladen und die Software der Komponente 12 mit der Softwareaktualisierung 38 oder die Konfiguration der Komponente 12 mit der Konfigurationsdatei 40 aktualisiert. Komponenten, die nicht eingerichtet sind sich selbst zu aktualisieren, sind in einer Komponentenliste 35 im Aktualisierungsvermittler 18 hinterlegt. Periodisch fragt daher in einem Schritt 70 der Aktualisierungsvermittler 18 beim Aktualisierungsverteiler 16 ab, ob Aktualisierungsdateien 34 für die in der Komponentenliste 35 enthaltenen Komponente 12, bereitstehen. Im Schritt 72 werden dann bereitstehende Aktualisierungsdateien 34 vom Aktualisierungsvermittler 18 geladen und in einem Schritt 74 Metadaten aus den Aktualisierungsdateien extrahiert, die Installationsanweisungen enthalten. Im Schritt 76 werden dann diese Komponenten 12, die sich nicht selbst aktualisieren können durch den Aktualisierungsvermittler 18 anhand der Installationsanweisungen aktualisiert.

Im Fall, dass bei der automatischen Aktualisierung im Schritt 68 durch die Komponente 12 selbst oder im Schritt 76 bei der Aktualisierung durch den Aktualisierungsvermittler 18 ein Fehler bei der Aktualisierung auftritt, wird in einem Schritt 78 ein Fehler an das Rechenzentrum 20 gemeldet.

## Patentansprüche

1. Verfahren zum Aktualisieren einer Software oder einer Konfiguration einer Komponente (12) eines Windparks (112) umfassend die Schritte:
a) Bereitstellen von Aktualisierungsdateien (34) für mehrere unterschiedliche Komponenten (12) von mehreren Windparks (112) und einer Liste (30) mit mehreren Einträgen (44), wobei jede Aktualisierungsdatei (34) jeweils einem von mehreren unterschiedlichen Komponententypen zugeordnet ist und wobei jeder Eintrag (44) in der Liste (30) eine Zuordnung einer bereitgestellten Aktualisierungsdatei zu einem der mehreren Komponententypen bezeichnet, wobei die Aktualisierungsdateien (34) und die Liste (30) von einem Datenspeicher (22) bereitgestellt werden, der außerhalb des Windparks (112), vorzugsweise in einem Rechenzentrum (20), angeordnet ist,
b) Prüfen durch einen Aktualisierungsverteiler (16), ob in der Liste (30) ein Eintrag (44) für einen Komponententyp einer Komponente enthalten ist, die in dem Windpark (112) angeordnet ist, in dem auch der Aktualisierungsverteiler (16) angeordnet ist, wobei hierfür vom Aktualisierungsverteiler (16) die Liste (30) geladen wird und im Aktualisierungsverteiler (16) hinterlegt ist, welche Komponenten im Windpark angeordnet sind, und
c1) wenn ein Eintrag (30) vorhanden ist, Laden der Aktualisierungsdatei (34) für die Komponente (12) in den Aktualisierungsverteiler (16) und Bereitstellen der Aktualisierungsdatei (16) für die Komponente (12) im Aktualisierungsverteiler (16) und
c2) wenn kein Eintrag (30) vorhanden ist, warten und daraufhin erneutes Prüfen gemäß Schritt b).

2. Verfahren nach Anspruch 1, wobei mindestens eine der Komponenten (12) beim Aktualisierungsverteiler (16) periodisch abfragt, ob eine Aktualisierungsdatei (34) für die jeweilige Komponente (12) im Aktualisierungsverteiler (16) vorliegt und im Fall, dass die Aktualisierungsdatei (34) vorliegt, wird die Aktualisierungsdatei (34) durch die Komponente (12) vom Aktualisierungsverteiler (16) geladen.

3. Verfahren nach Anspruch 1 oder 2, wobei ein Aktualisierungsvermittler (18) im ausgewählten Windpark (112) vorgesehen ist und der Aktualisierungsvermittler (18) eine Komponentenliste umfasst, wobei der Aktualisierungsvermittler (18) beim Aktualisierungsverteiler (16) periodisch abfragt, ob Aktualisierungsdateien (34) für die in der Komponentenliste enthaltenen Komponenten (12) im Aktualisierungsverteiler (16) vorliegen und im Fall, dass mindestens eine Aktualisierungsdatei (34) vorliegt, die Aktualisierungsdatei (34) durch den Aktualisierungsvermittler (18) vom Aktualisierungsverteiler (16) geladen wird und der Aktualisierungsvermittler (18) die Komponente (12) für die die Aktualisierungsdatei (34) geladen wurde, aktualisiert.

4. Verfahren nach Anspruch 3, wobei die Aktualisierungsdateien (34) Metadaten umfassen und der Aktualisierungsvermittler (18) aus den Metadaten Installationsanweisungen extrahiert, wobei die Installationsanweisungen bei der Aktualisierung der Komponente (12) durch den Aktualisierungsvermittler (18) verwendet werden.

5. Verfahren nach einem der vorhergehenden Ansprüche, wobei eine neue Softwareaktualisierung (38) oder Konfigurationsdatei (40) eines Komponententyps, die als neue Aktualisierungsdatei (34) noch nicht, vorzugsweise im Datenspeicher (22), bereitgestellt ist, insbesondere in einem Eingangsrechner (42), um Metainformationen ergänzt und/oder getestet und/oder verifiziert und daraufhin, vorzugsweise im Datenspeicher (22), als Aktualisierungsdatei (34) bereitgestellt wird, wobei die Metadaten insbesondere Informationen über die Komponente (12) und/oder Installationsanweisungen für den Aktualisierungsvermittler (18) umfassen, für die die Aktualisierungsdatei (34) vorgesehen ist, und die Liste (30) daraufhin basierend auf den Informationen der Metadaten aktualisiert wird.

6. Verfahren nach einem der vorhergehenden Ansprüche, wobei die Liste (30) durch einen Rechner (24) bereitgestellt wird, der vorzugsweise nicht dem Datenspeicher (22) entspricht, und der Rechner außerhalb des Windparks (112), vorzugsweise in dem Rechenzentrum (20), bereitgestellt ist, wobei zwischen dem Rechner (24) und dem Aktualisierungsverteiler (16) eine permanente oder periodisch hergestellte Datenverbindung (38) besteht.

7. Verfahren nach einem der vorhergehenden Ansprüche, wobei der Aktualisierungsverteiler (16) eine weitere Datenverbindung (32) zum Laden der Aktualisierungsdatei (34) mit dem Datenspeicher (22) aufbaut, die vorzugsweise unterschiedlich zu der Datenverbindung (28) zwischen dem Rechner (24) und dem Aktualisierungsverteiler (16) ist, wobei die weitere Datenverbindung (32) nach dem Laden der Aktualisierungsdatei (34) vorzugsweise wieder unterbrochen wird.

8. Verfahren nach einem der vorhergehenden Ansprüche, wobei
a) die Aktualisierungsdatei (34) eine Softwareaktualisierung für einen Komponententyp umfasst oder
b) die Aktualisierungsdatei (34) Konfigurationsdaten umfasst, die vorzugsweise Parametereinstellungen umfassen.

9. Verfahren nach einem der vorhergehenden Ansprüche, wobei mindestens ein Eintrag (44) in der Liste (30) zusätzlich eine Information über mindestens einen Windpark umfasst, für den die Aktualisierungsdatei (34) abrufbar ist und/oder mindestens einem Eintrag ein Zähler zugeordnet ist, der bei jedem Abruf der Aktualisierungsdatei (34) heruntergezählt wird, wobei Aktualisierungsdateien (34), die einen Zählerschwellenwert, zum Beispiel einen Wert 0, aufweisen, nicht mehr abrufbar sind.

10. Verfahren nach einem der vorhergehenden Ansprüche, wobei der Aktualisierungsverteiler (16) einen Fehler beim Aktualisieren einer Komponente (12) an das Rechenzentrum (20), insbesondere die Datenbank (22) und/oder den Rechner (24), meldet.

11. Windpark (112), der eingerichtet ist, das Verfahrens nach einem der Ansprüche 1 bis 10 auszuführen, wobei der Windpark mehrere Windenergieanlagen (100) sowie einen Aktualisierungsverteiler (16) umfasst, der eingerichtet ist, bereitgestellte Aktualisierungsdateien (34) von einem Rechenzentrum (20) zu laden und für Komponenten (12) des Windparks (112) bereitzustellen.

12. Windpark (112) nach Anspruch 11, umfassend einen Aktualisierungsvermittler (18), der eingerichtet ist, eine Aktualisierungsdatei (34) vom Aktualisierungsverteiler (16) zu laden, Installationsanweisungen aus der Aktualisierungsdatei (34) zu extrahieren und eine Komponente (12) des Windparks (112) in Abhängigkeit der Aktualisierungsdatei (34) und der Installationsanweisungen zu aktualisieren.

## Claims

1. Method for updating a software or a configuration of a component (12) of a wind farm (112) comprising the steps of:
a) providing update files (34) for a plurality of different components (12) of a plurality of wind farms (112) and a list (30) with a plurality of entries (44), wherein each update file (34) is associated with one of a plurality of different component types, and wherein each entry (44) in the list (30) denotes an association of a provided update file with one of the plurality of component types, wherein the update files (34) and the list (30) are provided by a data store (22) located outside the wind farm (112), preferably in a data center (20),
b) checking, by an updating distributor (16), whether the list (30) contains an entry (44) for a component type of a component which is arranged in the wind farm (112) in which the updating distributor (16) is also arranged, the list (30) being loaded by the updating distributor (16) for this purpose and it being stored in the updating distributor (16) which components are arranged in the wind farm, and
c1) if an entry (30) is present, loading the update file (34) for the component (12) into the update distributor (16) and providing the update file (16) for the component (12) in the update distributor (16), and
c2) if no entry (30) is present, wait and then check again according to step b).

2. Method according to claim 1, wherein at least one of the components (12) periodically queries the update distributor (16) whether an update file (34) for the respective component (12) is present in the update distributor (16) and, in the event that the update file (34) is present, the update file (34) is loaded by the component (12) from the update distributor (16).

3. Method according to claim 1 or 2, wherein an update broker (18) is provided in the selected wind farm (112) and the update broker (18) comprises a component list, wherein the update broker (18) periodically queries the update distributor (16) as to whether update files (34) for the components (12) contained in the component list are present in the update distributor (16) and, in the case that at least one update file (34) is present, the update file (34) is loaded by the update broker (18) from the update distributor (16) and the update broker (18) updates the component (12) for which the update file (34) was loaded.

4. Method according to claim 3, wherein the update files (34) comprise metadata and the update broker (18) extracts installation instructions from the metadata, wherein the installation instructions are used in the update of the component (12) by the update broker (18).

5. Method according to one of the preceding claims, wherein a new software update (38) or configuration file (40) of a component type, which is not yet provided as a new update file (34), preferably in the data store (22), in particular in an input computer (42), is supplemented and/or tested and/or verified by meta information and thereupon provided as an update file (34), preferably in the data store (22), wherein the meta data in particular comprise information about the component (12) and/or installation instructions for the update broker (18), preferably in the data store (22), as an update file (34), the metadata comprising in particular information about the component (12) and/or installation instructions for the update broker (18) for which the update file (34) is intended, and the list (30) then being updated on the basis of the information in the metadata.

6. Method according to one of the preceding claims, wherein the list (30) is provided by a computer (24), which preferably does not correspond to the data store (22), and the computer is provided outside the wind farm (112), preferably in the data center (20), wherein a permanent or periodically established data connection (38) exists between the computer (24) and the update distributor (16).

7. Method according to one of the preceding claims, wherein the update distributor (16) establishes a further data connection (32) for loading the update file (34) with the data store (22), which is preferably different from the data connection (28) between the computer (24) and the update distributor (16), wherein the further data connection (32) is preferably interrupted again after the update file (34) has been loaded.

8. Method according to any one of the preceding claims, wherein
a) the update file (34) comprises a software update for a component type, or
b) the update file (34) comprises configuration data, preferably comprising parameter settings.

9. Method according to one of the preceding claims, wherein at least one entry (44) in the list (30) additionally comprises information about at least one wind farm for which the update file (34) can be retrieved and/or at least one entry is assigned a counter which is counted down each time the update file (34) is retrieved, wherein update files (34) which have a counter threshold value, for example a value 0, can no longer be retrieved.

10. Method according to one of the preceding claims, wherein the update distributor (16) reports an error when updating a component (12) to the data center (20), in particular the database (22) and/or the computer (24).

11. Wind farm (112) arranged to perform the method according to any one of claims 1 to 10, wherein the wind farm comprises a plurality of wind turbines (100) and an update distributor (16) arranged to load provided update files (34) from a data center (20) and provide them to components (12) of the wind farm (112).

12. Wind farm (112) according to claim 11, comprising an update broker (18) arranged to load an update file (34) from the update distributor (16), to extract installation instructions from the update file (34) and to update a component (12) of the wind farm (112) in dependence on the update file (34) and the installation instructions.

## Revendications

1. Procédé pour mettre à jour un logiciel ou une configuration d'un composant (12) d'un parc éolien (112) comprenant les étapes :
a) de fourniture de fichiers de mise à jour (34) pour plusieurs composants (12) différents de plusieurs parcs éoliens (112) et d'une liste (30) avec plusieurs entrées (44), dans lequel chaque fichier de mise à jour (34) est associé à respectivement un de plusieurs types de composant différents et dans lequel chaque entrée (44) dans la liste (30) désigne une attribution d'un fichier de mise à jour fourni à l'un des plusieurs types de composant, dans lequel les fichiers de mise à jour (34) et la liste (30) sont fournis par une mémoire de données (22), qui est disposée à l'extérieur du parc éolien (112), de préférence dans un centre de calcul (20),
b) du fait de contrôler, par un distributeur de mise à jour (16), si, dans la liste (30) ; est contenue une entrée (44) pour un type de composant d'un composant, qui est disposé dans le parc éolien (112) dans lequel est disposé également le distributeur de mise à jour (16), dans lequel pour cela la liste (30) est chargée à partir du distributeur de mise à jour (16) et dans le distributeur de mise à jour (16) est mis en mémoire quels composants sont disposés dans l'éolienne, et
c1) lorsqu'une entrée (30) est présente, de chargement du fichier de mise à jour (34) pour le composant (12) dans le distributeur de mise à jour (16) et de fourniture du fichier de mise à jour (16) pour le composant (12) dans le distributeur de mise à jour (16) et
c2) lorsqu'aucune entrée (30) n'est présente, d'attente et, après cela, à nouveau de contrôle selon l'étape b).

2. Procédé selon la revendication 1, dans lequel au moins l'un des composants (12) demande périodiquement, au distributeur de mise à jour (16), si un fichier de mise à jour (34) pour le composant (12) respectif est présent dans le distributeur de mise à jour (16) et, dans le cas où le fichier de mise à jour (34) est présent, le fichier de mise à jour (34) est chargé par le composant (12) à partir du distributeur de mise à jour (16).

3. Procédé selon la revendication 1 ou 2, dans lequel un transmetteur de mise à jour (18) est prévu dans le parc éolien (112) sélectionné et le transmetteur de mise à jour (18) comprend une liste de composants, dans lequel le transmetteur de mise à jour (18) demande périodiquement au distributeur de mise à jour (16) si des fichiers de mise à jour (34) pour les composants (12) contenus dans la liste de composants sont présents dans le distributeur de mise à jour (16) et, dans le cas où au moins un fichier de mise à jour (34) est présent, le fichier de mise à jour (34) est chargé par le transmetteur de mise à jour (18) à partir du distributeur de mise à jour (16) et le transmetteur de mise à jour (18) met à jour le composant (12) pour lequel le fichier de mise à jour (34) a été chargé.

4. Procédé selon la revendication 3, dans lequel les fichiers de mise à jour (34) comprennent des métadonnées et le transmetteur de mise à jour (18) extrait des instructions d'installation des métadonnées, dans lequel les instructions d'installation sont utilisées par le transmetteur de mise à jour (18) lors de la mise à jour du composant (12).

5. Procédé selon l'une quelconque des revendications précédentes, dans lequel une nouvelle mise à jour de logiciel (38) ou un nouveau fichier de configuration (40) d'un type de composant, qui n'est pas encore fourni(e) en tant que nouveau fichier de mise à jour (34), de préférence dans la mémoire de données (22), en particulier dans un calculateur d'entrée (42), est complété par des méta-informations et/ou testé et/ou vérifié et, après cela, de préférence dans la mémoire de données (22), est fourni(e) en tant que fichier de mise à jour (34), dans lequel les métadonnées comprennent en particulier des informations sur le composant (12) et/ou des instructions d'installation pour le transmetteur de mise à jour (18) pour lesquelles le fichier de mise à jour (34) est prévu, et la liste (30) est mise à jour après cela sur la base des informations des métadonnées.

6. Procédé selon l'une quelconque des revendications précédentes, dans lequel la liste (30) est fournie par un calculateur (24), qui, de préférence, ne correspond pas à la mémoire de données (22), et le calculateur est fourni à l'extérieur du parc éolien (112), de préférence dans le centre de calcul (20), dans lequel une liaison de données (38), permanente ou établie de manière périodique, est présente entre le calculateur (24) et le distributeur de mise à jour (16).

7. Procédé selon l'une quelconque des revendications précédentes, dans lequel le distributeur de mise à jour (16) crée une autre liaison de données (32) pour le chargement du fichier de mise à jour (34) avec la mémoire de données (22), qui est de préférence différente de la liaison de données (28) entre le calculateur (24) et le distributeur de mise à jour (16), dans lequel l'autre liaison de données (32) est de préférence à nouveau interrompue après le chargement du fichier de mise à jour (34).

8. Procédé selon l'une quelconque des revendications précédentes, dans lequel
a) le fichier de mise à jour (34) comprend une mise à jour de logiciel pour un type de composant ou
b) le fichier de mise à jour (34) comprend des données de configuration, qui comprennent de préférence des réglages de paramètre.

9. Procédé selon l'une quelconque des revendications précédentes, dans lequel au moins une entrée (44) dans la liste (30) comprend en plus une information sur au moins un parc éolien, pour lequel le fichier de mise à jour (34) peut être interrogé et/ou un compteur, qui est décompté à chaque demande du fichier de mise à jour (34), est associé à au moins une entrée, dans lequel les fichiers de mise à jour (34) qui présentent une valeur seuil de compteur, par exemple une valeur 0, ne peuvent plus être interrogés.

10. Procédé selon l'une quelconque des revendications précédentes, dans lequel le distributeur de mise à jour (16) rapporte une erreur lors de la mise à jour d'un composant (12) au centre de calcul (20), en particulier la base de données (22) et/ou le calculateur (24).

11. Parc éolien (112), qui est conçu pour mettre en œuvre le procédé selon l'une quelconque des revendications 1 à 10, dans lequel le parc éolien comprend plusieurs éoliennes (100) ainsi qu'un distributeur de mise à jour (16), qui est conçu pour charger des fichiers de mise à jour (34) fournis à partir d'un centre de calcul (20) et pour fournir des composants (12) du parc éolien (112).

12. Parc éolien (112) selon la revendication 11, comprenant un transmetteur de mise à jour (18), qui est conçu pour charger un fichier de mise à jour (34) à partir du distributeur de mise à jour (16), pour extraire des instructions d'installation du fichier de mise à jour (34) et pour mettre à jour un composant (12) du parc éolien (112) en fonction du fichier de mise à jour (34) et des instructions d'installation.
